# EUROPEAN PATENT APPLICATION

(11) **EP 4 421 317 A1**
(43) Date of publication of application: **28.08.2024**
(21) Application number: 23464010.0
(22) Date of filing: 24.10.2023
(51) Int. Cl.: F03G 7/06

(54) **METHOD FOR ACTUATING SPRINGS OF SHAPE MEMORY MATERIALS**

(30) Priority: 22.02.2023 RO 202300079
(71) Applicant: Stefan cel Mare University of Suceava, 720229 Suceava, County Suceava (RO)
(72) Inventor: Bejenar, Ciprian, Suceava (RO); Bejenar, Marian, Suceava (RO); Popa, Valentin, Suceava (RO); Dimian, Mihai, Suceava (RO); Milici, Dan Laurentiu, Lisaura village, Suceava (RO); Rata, Mihai, Suceava (RO); Afanasov, Ciprian, Lipoveni village, Suceava (RO); Ungureanu, Constantin, Suceava (RO)

(57) **Abstract**

***Summary:*** Method for actuating springs of shape memory materials, according to the invention, it presents a distinctive, electrical supply sequence, in three phases, implementable and parameterizable, that can be modeled, integrated, adjusted and generated by programmable electronic systems, according to needs, so as to cause a reaction with an additional speed and force, by both through thermal effect, as well as through electromagnetic effect, developed simultaneously upon the coils of the actuation springs within an actuator.

## Description

The invention relates to a method for actuating springs of shape memory materials, to improve the response of special actuators, through controlled electrical supply, characterized by a specific actuation sequence, which provides distinctive performance.

In the purpose of actuating springs of shape memory materials, several solutions are known (WO2006105588A1, WO2022267195A1, CN113534395A) which consists, mainly, of different actuation methods, which involve electrical and/or electronic systems with specific destination for their implementation, by means of electrical contacts and/or electronic components, whose command and/or control maintain an electrical supply, respectively a controlled temperature of the actuators they compose.

Some of the disadvantages of the described solutions are related to that, they assume actuation methods which supplies with electrical energy springs of shape memory materials, in order of keeping controlled the temperature, only through the thermal effect of the electric current, but this effect leads to inadmissible heating or not precisely controlled in time, factors that can destroy the material or its properties.

The invention solves, mainly, the technical problem by the fact that, it allows the controlled concentration of a larger amount of energy, of combined form (temperature and electromagnetic force), upon the springs of shape memory materials, so as to provide an improved response of the mechanical displacement over time, in the actuation moment of the actuators that they compose.

Method for actuating springs of shape memory materials, according to the invention, it surprises the presented disadvantages and problems, in that it assumes, mainly, a distinctive, electrical supply sequence, in three phases, implementable and parameterizable, that can be modeled, integrated, adjusted and generated by programmable electronic systems, according to needs, so as to cause a reaction with an additional speed and force, by both through thermal effect, as well as through electromagnetic effect, developed simultaneously upon the coils of the actuation springs within an actuator.

The invention has the following advantages:
- The method introduces new possibilities for electrical actuation the springs made of shape memory materials, with efficient energy consumption;
- The method improves the performance of actuators that use actuation springs made of shape memory materials, in that it increases the reaction of speed and force developed by them in the electrical actuation moment;
- The method allows the adjustment of the actuation speed and force, developed by an actuator in the electrical actuation moment of the springs made of shape memory materials in componence;
- The method leads to an increase in the usage period of actuation springs made of shape memory materials, because they are not subjected to excessive thermal regimes;
- The method is compatible with actuation methods that compensates with electrical energy different disturbing factors upon the controlled phenomena on actuation.

Below is further given an embodiment of the invention in connection with the following figures:

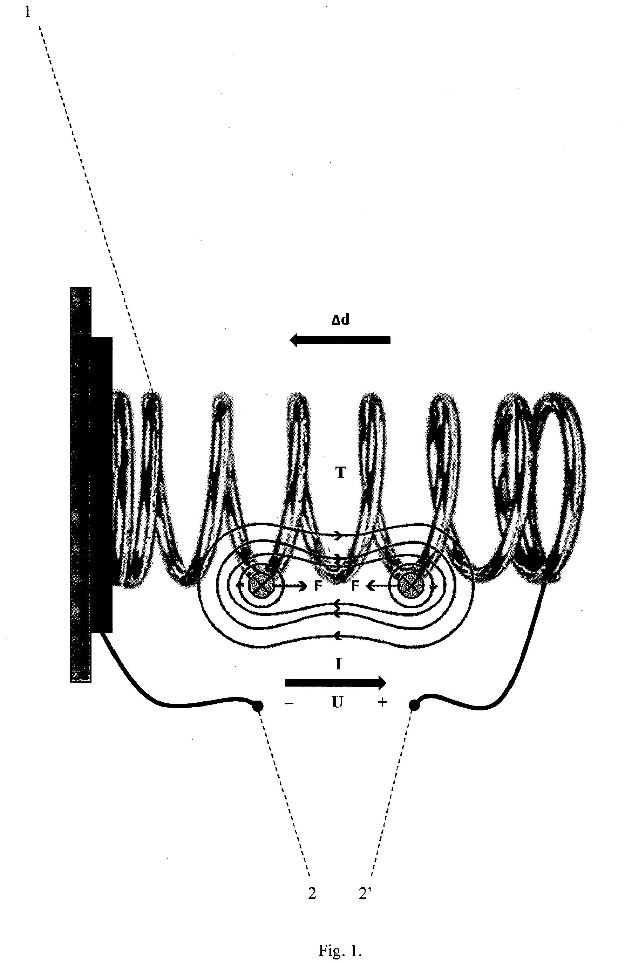

- Fig. 1 - Concomitant physical phenomena, specific to the method for actuating springs of shape memory materials;

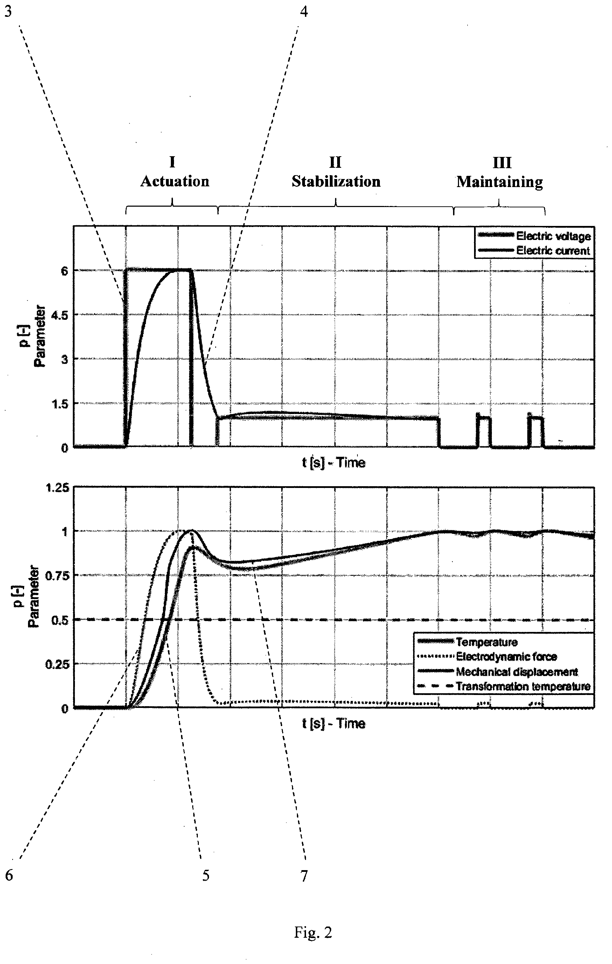

- Fig. 2 - Effects of the complete sequence (in three stages) of actuation, upon a spring of material with shape memory, which characterizes the method.

Method for actuating springs of shape memory materials, is characterized mainly, in that the actuation spring 1, of metallic nature and electrical conductor, made of intelligent material with shape memory property (e.g. nitinol [NiTi]), in normal *inactive* state and normal *uncompressed* shape (its temperature **T,** is lower than the transformation temperature of the material), is supplied between the endings 2, 2', with successive pulses of the electric voltage 3, **U,** being traversed by the electric current **4, I,** of adjustable amplitude and duration, due to which, on beginning, in a first stage **of actuation** (I), its state becomes *active* and its shape becomes *compressed* (its temperature **T** becomes higher than the transformation temperature of the material), in a short time, so that the amplitude of the supply voltage 3, **U,** and the passed current 4, **I,** are significant, and the power supply duration is temporized (shorter duration), followed by an eventual pause period, and then, in a second stage **of stabilization** (II), its shape is further adjusted in the direction of compression, so that the amplitude of the supply voltage 3, **U,** and of the passed current 4, **I,** is reduced, and the power supply duration is limited (intermediate duration), followed by an eventual pause period, and finally, in a third stage **of maintaining** (III), its shape is kept *compressed,* so that the average value of the supply voltage 3, **U,** and of the passed current 4**, I,** is low, and the power supply duration is long controlled, for the rest period of supply with electrical energy, depending on the time necessary to maintain it in *active* state and *compressed* form.

The invention involves, mainly, the successive suppling with pulses of electrical energy, modulated in amplitude and duration, provided in descending order of the actuating power, so as to cause a violent compression of the actuation spring 1, through a succession of stages in power supplying them with electrical energy, respectively that **of actuation** (I), for which the value of the electric current 4, **I,** increases significantly, a fact that causes the sudden increase in the temperature of the actuation spring 5, **T,** (without exceeding the optimal operating temperature) and the development of an electrodynamic force 6, **F,** additional between its coils, and together contributes to a mechanical displacement 7, **Δd**, violent, when the transformation temperature of the material is reached, respectively that **of stabilization** (II), for which the value of the electric current 4, **I,** is ameliorated, the evolution of the temperature of the actuation spring 5, **T,** is aligned to the optimal value for operation, and the electrodynamic force 6, **F,** is reduced, and for which the mechanical displacement 7; **Δd,** is adjusted, and respectively that of **maintaining** (III), for which the average value of the electric current 4, **I,** is constant, the temperature of the actuation spring 5, **T,** is stable at the optimum value, and the electrodynamic force 6, **F,** is negligible, and for which the mechanical displacement 7, **Δd**, is maximum, until its actuation is interrupted.

Method for actuating springs of shape memory materials, according to the invention, can be reproduced with the same performances and characteristics whenever is necessary, a fact that constitutes an argument in favor of meeting the criterion of industrial applicability.

## Claims

1. Method for actuating springs of shape memory materials, **characterized in that**, it assumes a successive suppling with pulses of electrical energy, modulated in amplitude and duration, provided in descending order of the actuating power, so as to cause a violent compression of the actuation spring (1), through a succession of stages in power supplying them with electrical energy, respectively that **of actuation** (I), for which the value of the electric current (4), **I,** increases significantly, a fact that causes the sudden increase in the temperature of the actuation spring (5), **T,** (without exceeding the optimal operating temperature) and the development of an electrodynamic force (6), **F,** additional between its coils, and together contributes to a mechanical displacement (7), **Δd**, violent, when the transformation temperature of the material is reached, respectively that **of stabilization** (II), for which the value of the electric current (4), **I,** is ameliorated, the evolution of the temperature of the actuation spring (5), **T,** is aligned to the optimal value for operation, and the electrodynamic force (6), **F,** is reduced, and for which the mechanical displacement (7), **Δd**, is adjusted, and respectively that of **maintaining** (III), for which the average value of the electric current (4), **I,** is constant, the temperature of the actuation spring (5), **T,** is stable at the optimum value, and the electrodynamic force (6), **F,** is negligible, and for which the mechanical displacement (7), **Δd**, is maximum, until its actuation is interrupted.
